# FASCICULE DE BREVET EUROPEEN

(11) **EP 2 115 980 B1**
(45) Date de publication et mention de la délivrance du brevet: **09.01.2019**
(21) Numéro de dépôt: 08762045.6
(22) Date de dépôt: 07.02.2008
(51) Int. Cl.: H04L 25/02, H04L 25/03, H04L 27/26, H04L 5/00

(54) **PROCÉDÉ DE TRAITEMENT DE SYMBOLES DANS UNE COMMUNICATION BIDIRECTIONNELLE PAR RETOURNEMENT TEMPOREL, ET ENTITÉ COMMUNICANTE POUR SA MISE EN OEUVRE**
SYMBOLVERARBEITUNG IN EINER BIDIREKTIONALEN KOMMUNIKATION MITTELS ZEITUMKEHR
SYMBOL PROCESSING IN A BI-DIRECTIONAL COMMUNICATION BY TIME REVERSAL

(30) Priorité: 05.03.2007 FR 0753651
(43) Date de publication de la demande: 11.11.2009
(73) Titulaire: 3G Licensing S.A., 2132 Luxembourg (LU)
(72) Inventeur: PHAN HUY, Dinh Thuy, 75004 Paris (FR); CHAUFRAY, Jean-Marie, 92290 Chatenay Malabry (FR)
(74) Mandataire: Camolese, Marco
(86) Numéro de dépôt international: PCT/FR2008/050187
(87) Numéro de publication internationale: WO 2008/110722

(56) Documents cités:
- GOMES J ET AL: "Time-reversed OFDM communication in underwater channels" SIGNAL PROCESSING ADVANCES IN WIRELESS COMMUNICATIONS, 2004 IEEE 5TH WORKSHOP ON LISBON, PORTUGAL 11-14 JULY 2004, PISCATAWAY, NJ, USA,IEEE, 11 juillet 2004 (2004-07-11), pages 626-630, XP010805978 ISBN: 0-7803-8337-0

## Description

La présente invention concerne un traitement de symboles transmis dans un réseau de radiocommunication basé sur un duplexage par répartition dans le temps TDD ("Time Division Duplex" en anglais), utilisant par exemple une modulation selon un multiplexage de fréquences orthogonales OFDM ("Orthogonal Frequency Division Multiplexing" en anglais).

Plus particulièrement, elle a trait à une introduction de la technique du retournement temporel pour des communications dans les sens montant et descendant dans un tel système.

La plupart des lois de la physique, et en particulier celles qui gouvernent l'acoustique, sont symétriques par rapport au temps. Une onde temporellement inversée se propage comme une onde directe qui remonterait le temps.

Le retournement temporel est une technique de focalisation des ondes, typiquement acoustiques, qui repose sur l'invariance par renversement du temps de l'équation d'onde. Une impulsion brève émise d'un point source se propage dans un milieu de propagation inconnu. Une partie de cette onde est enregistrée, généralement par un ensemble de capteurs appelé Miroir à Retournement Temporel (MRT), puis numérisée et retournée temporellement avant d'être renvoyée dans le milieu de propagation. L'onde recouvre alors les étapes antérieures de sa vie et converge vers le point source en y reformant une impulsion brève. Le signal recueilli au point source est quasi identique dans sa forme au signal d'origine émis au point source. En particulier, l'onde retournée converge d'autant précisément vers le point source que le milieu de propagation est complexe.

La technique du retournement temporel peut être étendue aux réseaux de radiocommunication pour améliorer l'égalisation des canaux de propagation et ainsi le traitement de symboles reçus à travers ces canaux de propagation. Dans ce cas, la mise en oeuvre du retournement temporel nécessite la connaissance des canaux de propagation au niveau de l'émetteur.

L'article de J. Gomes et V. Barroso intitulé « Time-Reversed OFDM Communication in Underwater Channels » (5th Workshop on Signal Processing Advances in Wireless Communications, IEEE 2004) divulgue une utilisation du retournement temporel entre un émetteur de données OFDM composé de plusieurs transducteurs, et un récepteur. Lors d'une première phase, dite « phase directe », le récepteur envoie une impulsion à chaque transducteur. Le transducteur n° *m* reçoit la réponse impulsionnelle résultant du passage de ladite impulsion à travers le canal correspondant, et la retourne temporellement. Puis, lors d'une seconde phase, dite phase réciproque, chaque transducteur envoie au récepteur un signal égal au produit de convolution d'un signal de données OFDM par ladite réponse impulsionelle retournée temporellement.

Dans l'état de la technique, aucun réseau de radiocommunication basé sur un duplexage par répartition dans le temps, dit plus simplement duplexage temporel, n'utilise la technique du retournement temporel pour améliorer la qualité de service à la fois dans le sens montant et le sens descendant, sans recourir à des ressources supplémentaires du réseau.

Pour remédier aux inconvénients évoqués ci-dessus, un procédé selon l'invention pour traiter des symboles séparés par des intervalles de garde et transmis dans des trames à travers un canal de propagation entre des première et deuxième entités communicantes selon un duplexage temporel, est caractérisé en ce qu'il comprend dans la deuxième entité :
après réception d'une première impulsion émise pendant un intervalle de garde prédéterminé d'une trame de symboles, une estimation de la réponse impulsionnelle du canal de propagation en fonction de l'impulsion reçue, un retournement temporel de la réponse impulsionnelle estimée et un filtrage des symboles en fonction de la réponse impulsionnelle retournée temporellement, et
une émission des symboles filtrés et d'une deuxième impulsion pendant un intervalle de garde prédéterminé dans une trame vers la première entité.

Avantageusement, l'émission d'une impulsion pendant l'intervalle de garde prédéterminé de la trame par la deuxième entité permet à la première entité de connaître les conditions de propagation du canal avant l'émission d'une trame, tout en préservant la durée de la trame. Aucune ressource temporelle supplémentaire n'est donc réservée spécialement pour l'estimation de la réponse impulsionnelle du canal de propagation en fonction de l'impulsion reçue dans la trame.

Selon d'autres caractéristiques de l'invention, lorsque chaque intervalle de garde est alloué à l'émission d'une donnée de redondance, la donnée de redondance relative à l'intervalle de garde prédéterminé est remplacée par l'impulsion à émettre, ou bien la taille de la donnée de redondance est réduite dans l'intervalle de garde prédéterminé pour y émettre l'impulsion. Selon une autre réalisation, la taille d'au moins quelques données de redondance dans la trame est réduite, des intervalles de garde incluant les données de redondance réduites sont diminués, et l'intervalle de garde prédéterminé est créé en ayant une durée correspondant à la diminution des intervalles de garde.

Le retournement temporel est donc utilisé avec un impact minimum sur la structure de la trame, puisque la durée de cette dernière est inchangée et seulement une donnée de redondance relative à un intervalle de garde peut être modifiée.

Par ailleurs, l'impulsion peut être émise pendant le dernier intervalle de garde de la trame, afin que l'entité recevant l'impulsion ait une connaissance d'un état récent du canal de propagation.

Selon une autre caractéristique, la deuxième entité peut comprendre plusieurs antennes et émettre autant de deuxièmes impulsions à des instants différents pendant la trame que d'antennes de la deuxième entité. L'utilisation de la technique de retournement temporel selon l'invention est donc adaptée à des systèmes à plusieurs antennes à l'émission et à la réception garantissant un débit élevé de transmission dans les sens montant et descendant.

Selon une réalisation de l'invention, l'impulsion est émise analogiquement pendant l'intervalle de garde prédéterminé de la trame. Une réponse impulsionnelle du canal de propagation est alors estimée en fonction de l'impulsion reçue par la première entité qui filtre un signal comprenant les symboles d'une autre trame en fonction de la réponse impulsionnelle retournée temporellement.

Selon une autre réalisation de l'invention, l'impulsion est émise sous forme d'une séquence de bit pendant l'intervalle de garde prédéterminé de la trame. Une réponse impulsionnelle du canal de propagation est alors estimée en fonction de ladite séquence de bit reçue par la première entité sur la base d'un modèle discret du canal de propagation et retourne temporellement la réponse impulsionnelle estimée pour filtrer des symboles à émettre.

L'invention concerne également une entité communicante pour traiter des symboles séparés par des intervalles de garde et transmis dans des trames à travers un canal de propagation entre ladite entité communicante et une autre entité communicante selon un duplexage temporel, caractérisée en ce qu'elle comprend :
- un moyen pour estimer la réponse impulsionnelle du canal de propagation en fonction d'une première impulsion reçue qui a été émise par ladite autre entité pendant un intervalle de garde prédéterminé d'une trame de symboles,
- un moyen pour retourner temporellement la réponse impulsionnelle estimée, et
- un moyen pour filtrer des symboles en fonction de la réponse impulsionnelle retournée temporellement, et
- un moyen pour émettre les symboles filtrés et une deuxième impulsion pendant un intervalle de garde prédéterminé dans une trame vers ladite autre entité.

Enfin, l'invention se rapporte à un programme d'ordinateur apte à être mis en oeuvre dans une entité communicante pour traiter des symboles transmis dans des trames selon un duplexage temporel, ledit programme comprenant des instructions qui, lorsque le programme est exécuté dans ladite entité communicante, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique de deux entités communiquant à travers un réseau de radiocommunication ;
- la figure 2 est un bloc-diagramme d'une entité communicante selon l'invention ;
- la figure 3 est un algorithme d'un procédé de traitement de symboles selon l'invention ;
- les figures 4A et 4B montrent une trame de symboles selon des variantes d'un premier mode de réalisation de l'invention ; et
- la figure 5 montre une trame de symboles selon un deuxième mode de réalisation de l'invention.

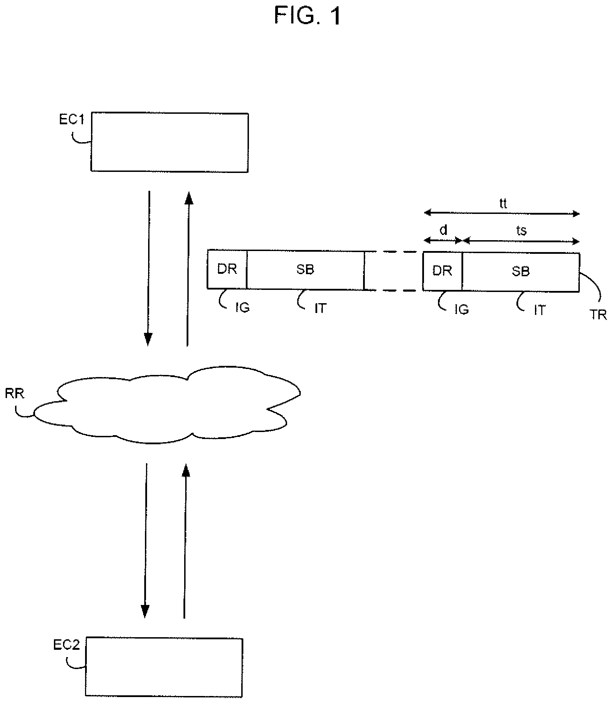

En référence à la figure 1, des première et deuxième entités communicantes EC1 et EC2 sont aptes à communiquer à travers un réseau de radiocommunication RR.

Selon un premier exemple, le réseau de radiocommunication RR est un réseau de radiocommunication cellulaire numérique par exemple de type GSM ("Global System for Mobile communications" en anglais), ou UMTS ("Universal Mobile Telecommunications System" en anglais), ou bien un réseau local sans fil de type WLAN ("Wireless Local Area Network" en anglais) ou WIMAX ("World wide Interoperability Microwave Access" en anglais). L'une des deux entités communicantes est alors une station de base et l'autre des deux entités communicantes est un terminal radio mobile.

Selon un deuxième exemple, le réseau de radiocommunication RR est un réseau local sans fil ad-hoc dépourvu d'infrastructure. Les deux entités communicantes sont deux terminaux qui communiquent directement entre eux de manière spontanée sans l'intermédiaire d'un équipement de centralisation de communication comme un point ou une borne d'accès ou bien une station de base.

Dans la suite de la description, les deux entités communicantes utilisent un canal de propagation pour transmettre des signaux selon un duplexage temporel, c'est-à-dire par répartition dans le temps TDD ("Time Division Duplex" en anglais). Dans ce mode de transmission bidirectionnelle, le canal de propagation dans un premier sens, par exemple le sens descendant depuis l'entité EC1 vers l'entité EC2, est sensiblement identique au canal de propagation dans un deuxième sens inverse du premier sens, soit le sens montant depuis l'entité EC2 vers l'entité EC1. La communication entre une station de base et un terminal radio mobile s'effectue sur la même fréquence porteuse en des instants différents pour l'émission et la réception. Par exemple, à un premier instant, la station de base en tant qu'entité EC1 émet sur la voie descendante un signal qui est reçu et traité par le terminal mobile en tant qu'entité EC2, et pendant un deuxième intervalle de temps, le terminal mobile transmet sur la voie montante un signal qui est reçu et traité par la station de base.

Chaque entité EC1, EC2 transmet un signal pendant une trame radio TR contenant des intervalles de temps IT dédiés à la transmission de symboles SB et séparés par des intervalles de garde IG.

Les symboles supportés par un signal transmis à travers le canal de propagation subissent des échos suivant des trajets multiples. Un symbole SB émis par la première entité EC1 est reçu par la deuxième entité EC2 sous forme de plusieurs symboles atténués et retardés différemment. Par conséquent, un symbole émis pendant un intervalle de temps donné IT peut être superposé au moins partiellement à un écho relatif au symbole émis pendant un intervalle de temps consécutif à l'intervalle de temps donné. Il se produit alors des interférences entre les symboles. Pour éviter ces interférences, un intervalle de garde IG d'une durée d est ajouté entre chaque intervalle de temps IT de durée ts occupé par un symbole émis.

L'intervalle de garde IG peut être un temps mort pendant lequel aucune donnée n'est émise. Plus généralement, l'intervalle de garde IG est dédié à l'émission d'une portion d'un symbole, appelée donnée de redondance DR, identique à la portion de même longueur qui termine le symbole. Chaque symbole est donc précédé par une extension périodique du symbole lui-même. La durée totale tt destinée au symbole émis est alors tt = ts + d. Pour une élimination efficace des interférences entre symboles, l'intervalle de garde et donc la taille de la donnée de redondance doivent couvrir tous les retards relatifs aux échos des symboles de manière à compenser l'étalement du canal de propagation lors du traitement des symboles reçus.

Typiquement, pour une communication selon un multiplexage de fréquences orthogonales OFDM ("Orthogonal Frequency Division Multiplexing" en anglais), la portion de symbole émise pendant l'intervalle de garde IG est appelée "préfixe cyclique".

Par ailleurs, chaque entité communicante EC1, EC2 comprend une antenne correspondant à un canal de propagation entre les deux entités communicante EC1 et EC2 à entrée et sortie simple SISO ("Simple Input - Simple Output", en anglais). Selon une autre réalisation, chaque entité communicante EC1, EC2 comprend plusieurs antennes correspondant à des canaux de propagation entre les deux entités communicante EC1 et EC2 à entrée et sortie multiples MIMO ("Multiple Input - Multiple Output", en anglais).

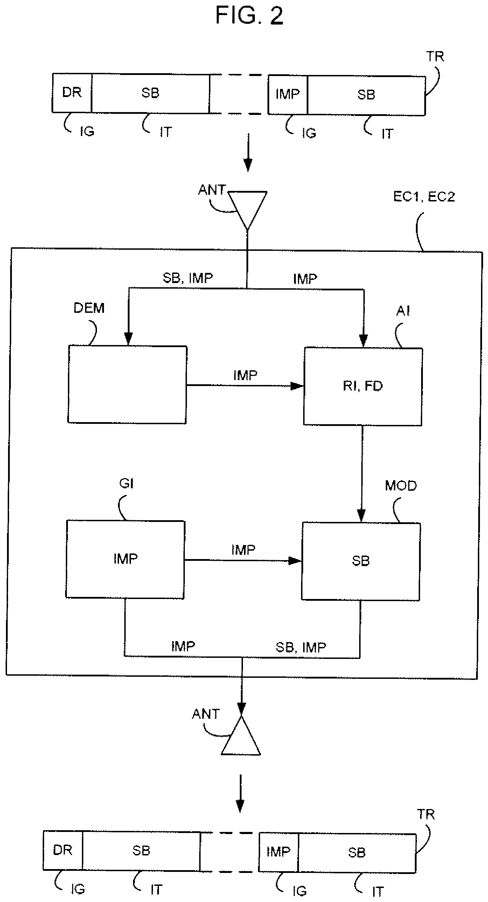

Dans la figure 2 sont seulement représentés des moyens inclus dans l'une des deux entités communicantes en relation avec l'invention. Les deux entités communicantes comprennent des moyens similaires puisque le principe de la communication entre les deux entités est le même dans le sens descendant et dans le sens montant. Ces moyens sont un modulateur MOD, un générateur d'impulsion GI, un analyseur d'impulsion AI et un démodulateur DEM. Chaque entité comprend en outre au moins une antenne d'émission/réception ANT qui peut être constituée de plusieurs antennes.

Le modulateur MOD convertit une séquence de bits en des symboles complexes qui sont transmis sous forme d'un bloc de symboles pendant une trame radio TR contenant des intervalles de temps IT dédiés chacun à l'émission d'un symbole SB. Comme décrit précédemment, deux intervalles de temps consécutifs dans chaque trame sont séparés par un intervalle de garde IG pendant lequel n'est émis aucun signal ou est émise une donnée de redondance DR.

Pour une communication selon un multiplexage de fréquences orthogonales OFDM, le bloc de symboles transmis pendant une trame contient par exemple 68 symboles OFDM séparés entre eux par des données de redondance qui sont des préfixes cycliques.

Selon la technique du retournement temporel, une impulsion est émise depuis un point source et se propage dans un milieu de propagation inconnu pour être reçue et traitée à un point de réception. L'onde reçue est alors numérisée et retournée temporellement avant d'être renvoyée dans le milieu de propagation afin de converger vers le point source en y reformant une impulsion.

Selon l'invention, l'impulsion IMP peut être traitée de manière analogique ou numérique.

Dans une réalisation d'entité communicante à traitement analogique d'impulsion, le générateur d'impulsion GI génère une impulsion IMP qui est émise pendant l'un des intervalles de garde IG d'une trame radio TR de symboles à émettre, ou en variante pendant quelques uns des intervalles de garde IG de la trame radio TR. Le générateur d'impulsion GI coopère avec le modulateur MOD de manière à n'émettre l'impulsion IMP que pendant un intervalle de garde prédéterminé qui n'est dédié à aucune transmission de données de redondance, afin que seule l'impulsion émise par trame radio TR au moyen de l'antenne d'émission soit reçue sans interférence à travers le canal de propagation par l'antenne de réception de l'autre entité communicante. Les antennes d'émission et de réception dans une entité peuvent être confondues en une seule antenne ANT reliée à un circulateur.

L'impulsion de la trame radio TR émise est ensuite reçue par l'antenne de réception ANT de l'autre entité communicante, puis traitée directement par l'analyseur d'impulsion AI qui enregistre la réponse impulsionnelle RI du canal de propagation. L'analyseur d'impulsion AI retourne temporellement la réponse impulsionnelle et la fournit au modulateur MOD. Ce dernier filtre les symboles à émettre en fonction de la réponse impulsionnelle retournée temporellement.

Dans une réalisation d'entité communicante à traitement numérique d'impulsion, le générateur d'impulsion GI commande au modulateur MOD l'insertion d'une séquence de bit, qui peut ne comprendre qu'un seul bit à l'état "1", pendant l'un des intervalles de garde IG d'une trame radio TR de symboles à émettre, ou en variante pendant quelques uns des intervalles de garde IG de la trame radio TR. Par exemple, ledit intervalle de garde contient deux séries de bits à l'état "0" séparées par un bit à l'état "1". L'émission de cette séquence de bit est alors considérée comme l'émission d'une impulsion IMP après une conversion analogique du signal numérique en sortie du générateur d'impulsion.

De manière connue, les différents symboles reçus par l'antenne de réception ANT de l'autre entité communicante pendant la trame radio TR sont appliqués à des étages d'amplification, de démodulation de fréquence et de filtrage adapté en entrée du démodulateur DEM. Les bits correspondant à l'impulsion reçue démodulée sont alors fournis à l'analyseur d'impulsion AI qui estime la réponse impulsionnelle du canal et retourne temporellement cette dernière pour former la fonction de transfert d'un filtre numérique de pré-distorsion FD à fournir au modulateur MOD. Ce dernier filtre préalablement les symboles d'une prochaine trame radio à émettre à travers le filtre de pré- distorsion FD, puis module les symboles filtrés avant de les émettre.

Dans la réalisation de traitement analogique ou numérique, le modulateur MOD traite donc les symboles à émettre en fonction de l'impulsion reçue et prévoit l'émission d'une autre impulsion dans la trame de symboles à émettre. Le signal émis par l'une des entités et déformé en fonction de l'impulsion reçue est alors reçu par l'autre des entités sous une forme semblable à la forme du signal si ce dernier n'avait pas subi de traitement en fonction l'impulsion reçue, dit traitement par retournement temporel. Grâce à la technique du retournement temporel, le signal émis converge vers le point source de l'impulsion, ce qui réduit l'étalement du canal de propagation et améliore le traitement des symboles reçus.

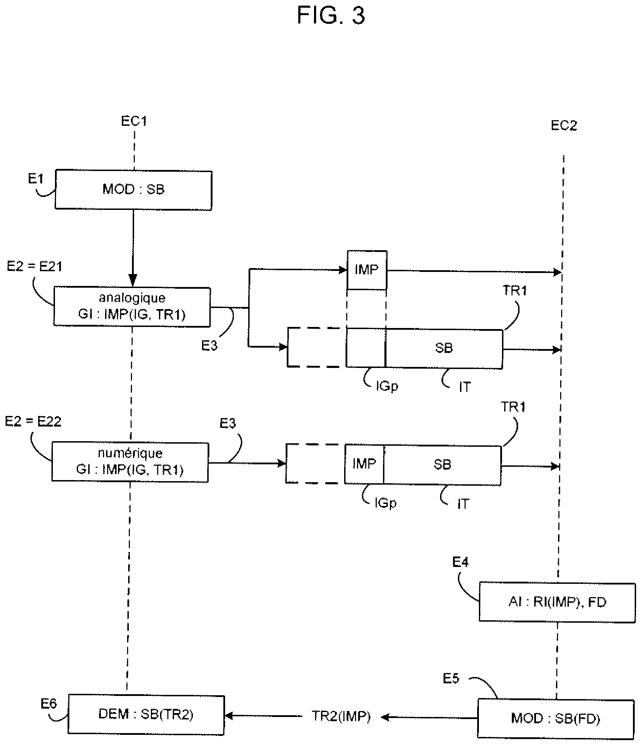

En référence à la figure 3, le procédé de transmission selon l'invention comprend des étapes E1 à E6 exécutées automatiquement dans les deux entités communicantes.

Par souci de clarté, les étapes E1 à E3 et E6 sont décrites relativement à une première entité communicante EC1 et les étapes E4 et E5 sont décrites relativement à une deuxième entité communicante EC2. Puisque les deux entités communiquent de manière bidirectionnelle selon un duplexage temporel, les étapes E1 à E3 et E6, et les étapes E4 et E5 peuvent être également exécutées respectivement dans la deuxième entité EC2 et la première entité EC1.

A l'étape E1, le modulateur MOD de la première entité communicante EC1 convertit une séquence de bits en des symboles SB qui sont à émettre sous forme d'un bloc de symboles pendant une première trame radio TR1 contenant des intervalles de temps IT qui sont dédiés chacun à la transmission d'un symbole SB et qui sont séparés par des intervalles de garde IG par exemple dédiés à la transmission de données de redondance DR.

A l'étape E2, la première entité communicante EC1 génère une impulsion IMP à émettre pendant un intervalle de garde prédéterminé IGp de la première trame radio TR1.

A titre d'exemple, l'étape E2 est une étape de traitement analogique E21 ou une étape de traitement numérique E22.

A l'étape E21, le générateur d'impulsion GI coopère avec le modulateur MOD de manière à générer une impulsion IMP qui doit être émise pendant un intervalle de garde prédéterminé IGp de la première trame radio TR1 de symboles à émettre. L'impulsion est par exemple mélangée à la première trame TR1 pendant l'intervalle IGp sous la commande du générateur d'impulsion GI.

A l'étape E22, le générateur d'impulsion GI commande au modulateur MOD l'insertion d'une séquence de bit prédéterminée dans un intervalle de garde prédéterminé IGp de la première trame radio TR1 de symboles à émettre. L'émission de cette séquence de bit prend la forme d'une impulsion IMP après une conversion analogique de la séquence de bit prédéterminée.

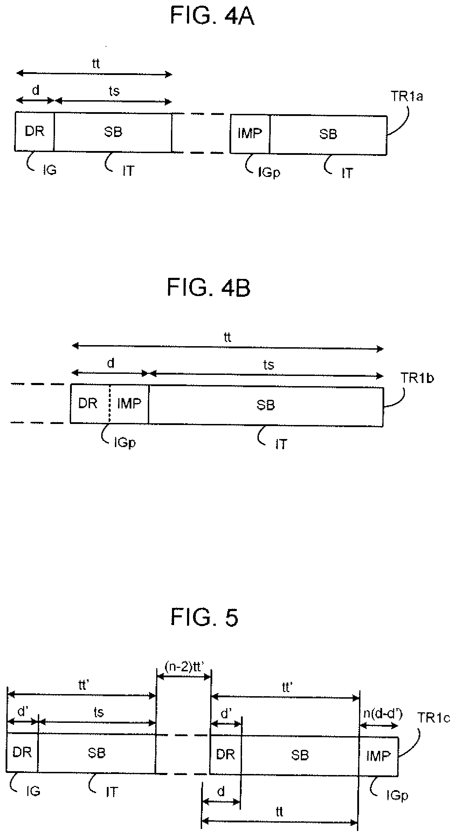

Dans un premier mode de réalisation illustré aux figures 4A et 4B, l'intervalle de garde prédéterminé IGp est alloué à la transmission d'une donnée de redondance DR. Dans un premier exemple de trame radio TR1a montré à la figure 4A, l'impulsion IMP est émise à la place de ladite donnée de redondance DR qui est supprimée et n'est pas transmise dans l'intervalle IGp. Dans un deuxième exemple de trame radio TR1b montré à la figure 4B, la taille de la donnée de redondance DR est réduite à une taille prédéfinie libérant ainsi une durée disponible pour l'émission de l'impulsion IMP dans l'intervalle de garde prédéterminé IGp. L'impulsion est émise avant ou après la donnée de redondance réduite. Dans ce premier mode de réalisation, la durée totale tt destinée à chaque symbole transmis est inchangée.

Par exemple, l'impulsion IMP est émise lors du dernier intervalle de garde IG de la trame radio TR1 afin que la deuxième entité EC2 analyse une réponse impulsionnelle du canal de propagation la plus récente possible par période de trame.

En variante, les intervalles de garde ne sont pas dédiés à la transmission de données de redondance DR. Dans ce cas, l'impulsion IMP est émise lors d'un intervalle de garde prédéterminé IGp, par exemple le dernier de la première trame TR1, sans modification des données initiales à émettre.

Dans un deuxième mode de réalisation illustré à la figure 5, quelques unes ou toutes les données de redondance DR d'une trame radio TR1c émise par l'entité EC1 ont une taille réduite prédéfinie par rapport à la taille des données de redondance classiques et par suite les intervalles de garde IG incluant les données de redondance réduites sont diminués. Par exemple à la fin de la trame TR1c est alors libérée une durée correspondant à la diminution des intervalles de garde IG incluant les données de redondance réduites ce qui crée un intervalle de garde pour y émettre l'impulsion IMP.

La technique du retournement temporel expliquée précédemment réduit l'étalement du canal de propagation et donc les échos des symboles reçus. Par conséquent, la donnée de redondance, qui a généralement une taille permettant de couvrir au moins tous les retards relatifs aux échos des symboles, peut être d'autant plus réduite que l'étalement du canal de propagation est réduit.

Lorsque le retournement temporel n'est pas utilisé, on considère que les données de redondance DR sont divisées chacune par exemple en 30 échantillons. L'utilisation du retournement temporel permet de réduire la taille de chacune des données de redondance d'au moins un échantillon. Si une trame radio TR1c contient plus de 30 symboles SB, donc plus de 30 données de redondance DR, au moins 30 unités de temps relatives chacune à un échantillon de données de redondance sont libérées. Les 30 unités de temps sont regroupées à la fin de la trame pour créer un intervalle de garde prédéterminé IGp ce qui conserve la durée totale de la trame. Dans ce deuxième mode de réalisation, les intervalles de garde IG ont une durée d' réduite par rapport à la durée classique d des intervalles de garde. La durée totale tt' destinée à chaque symbole transmis est également réduite par rapport à la durée totale classique tt des symboles. De manière générale, pour une trame TR1c contenant n symboles, avec n un entier, la durée de l'impulsion IMP dans l'intervalle de garde prédéterminé IGp est n × (d - d').

A l'étape E3, la première entité EC1 émet la première trame TR1, ainsi que l'impulsion IMP pendant l'intervalle de garde prédéterminé IGp de la trame TR1, vers la deuxième entité EC2 via le canal de propagation entre l'antenne d'émission de la première entité EC1 et l'antenne de réception de la deuxième entité EC2.

A l'étape E4, après avoir reçu l'impulsion IMP émise par la première entité EC1 à l'étape E3, la deuxième entité EC2 estime une réponse impulsionnelle du canal de propagation en fonction de l'impulsion reçue et retourne temporellement la réponse impulsionnelle estimée. La réponse impulsionnelle retournée temporellement sert à construire dynamiquement un filtre numérique à appliquer à des symboles à émettre par la deuxième entité EC2.

A titre d'exemple, l'analyseur d'impulsion AI de la deuxième entité EC2 enregistre directement la réponse impulsionnelle RI du canal de propagation en fonction de l'impulsion reçue. L'analyseur d'impulsion AI retourne temporellement la réponse impulsionnelle. A cette fin, l'analyseur d'impulsion AI mémorise par exemple les coefficients de la réponse impulsionnelle RI et classe les conjugués de ces derniers dans un ordre inverse à celui des coefficients de la réponse impulsionnelle. Ces coefficients sont alors ceux de la réponse impulsionnelle retournée temporellement et servent à construire dynamiquement un filtre numérique de pré-distorsion FD pour des symboles à émettre. L'analyseur d'impulsion AI fournit le filtre FD au modulateur MOD.

Dans un autre exemple, à l'étape E4, l'analyseur d'impulsion AI analyse la réponse impulsionnelle RI du canal de propagation en fonction de l'impulsion reçue par un séparateur analogique sous la commande de l'analyseur d'impulsion et en déduit un modèle discret du canal de propagation. L'analyseur d'impulsion AI retourne alors temporellement le modèle discret du canal pour former un filtre de pré-distorsion FD qui est fourni au modulateur MOD afin de filtrer les symboles à émettre en fonction du filtre de pré- distorsion.

A l'étape E5, la deuxième entité EC2 filtre des symboles à émettre vers la première entité EC1 en fonction du filtre de pré-distorsion relatif à la réponse impulsionnelle retournée temporellement. La deuxième entité EC2 émet alors une deuxième trame TR2 à destination de la première entité EC1, la deuxième trame contenant les symboles filtrés en fonction de la réponse impulsionnelle retournée temporellement à l'issue de l'étape E4.

Par ailleurs, de la même manière qu'à l'étape E2, la deuxième entité EC2 émet une impulsion IMP sous forme analogique ou numérique pendant un intervalle de garde prédéterminé IGp de la deuxième trame TR2. Ainsi, la première entité EC1 traite l'impulsion contenue dans la deuxième trame TR2 de la même manière qu'à l'étape E4.

A l'étape E6, la première entité EC1 reçoit la deuxième trame TR2. Grâce à la technique de retournement temporel, la dispersion temporelle du canal de propagation est réduite. Le démodulateur DEM de la première entité égalise et recouvre alors plus simplement et rapidement les symboles de la deuxième trame que dans la technique antérieure, puisque le signal correspondant à la trame reçue est "pré-égalisé" à l'émission dans l'entité EC2, c'est-à-dire le signal reçu présente peu d'échos et est semblable en amplitude et fréquence au signal qui a été appliqué initialement au modulateur MOD avant le traitement des symboles selon le retournement temporel.

Il sera entendu que le traitement effectué à l'étape E6 est également effectué par chaque entité lors de la réception d'une trame. Les symboles d'une trame sont traités au fur et à mesure de la réception de la trame.

Au cours d'une communication entre les deux entités, le traitement des symboles reçus ne bénéficie pas d'une égalisation simplifiée grâce au retournement temporel seulement pour la toute première trame émise lors de la communication, puisque l'entité émettant cette trame n'a pas encore reçu d'impulsion pour prendre en compte les conditions de propagation du canal.

En variante, chaque entité EC1, EC2 fonctionne en diversité spatiale et comprend plusieurs antennes d'émission/réception. Dans le procédé décrit ci-dessus, une impulsion est spécifique au canal de propagation entre une antenne d'émission de la première entité EC1 et une antenne de réception de la deuxième entité EC2. Si la première entité EC1 comprend AN1 antennes et la deuxième entité EC2 comprend AN2 antennes, alors il existe AN1 × AN2 canaux de propagation entre les deux entités, les nombres AN1 et AN2 étant des entiers différents ou égaux.

Dans ce cas, lors des étapes E1 à E3, la première entité EC1 émet AN1 impulsions distinctes à des instants différents pendant une première trame TR1 respectivement par les AN1 antennes d'émission. Dans la deuxième entité EC2, au moins AN2 impulsions distinctes pendant la deuxième trame TR2 doivent être émises à des instants différents respectivement par les AN2 antennes d'émission.

Selon le premier mode de réalisation décrit précédemment en référence aux figures 4A et 4B, les AN1 impulsions sont par exemple émises respectivement pendant les AN1 derniers intervalles de garde IG de la première trame TR1a ou TR1b.

Selon le deuxième mode de réalisation décrit précédemment en référence à la figure 5, les AN1 impulsions sont par exemple émises successivement à la fin la première trame TR1c pendant une durée d'intervalle de garde créée par la réduction des intervalles de garde IG.

Par exemple, pour chaque impulsion reçue par la deuxième entité EC2, l'analyseur d'impulsion AI estime la réponse impulsionnelle des canaux de propagation entre une antenne de la première entité depuis laquelle l'impulsion a été émise et les différentes antennes de la deuxième entité. A chaque impulsion reçue, l'analyseur d'impulsion estime donc AN2 réponses impulsionnelles, et après réception de toute la première trame TR1, l'analyseur d'impulsion a estimé AN1 × AN2 réponses impulsionnelles.

La deuxième entité EC2 retourne temporellement les AN1 × AN2 réponses impulsionnelles estimées et combine ces dernières pour former un seul filtre de pré-distorsion numérique FD. Par exemple, les coefficients de même rang de chaque réponse impulsionnelle retournée sont pondérés et sommés pour obtenir un coefficient du filtre de pré-distorsion FD. La deuxième entité EC2 filtre alors des symboles en fonction du filtre de pré-distorsion FD et émet les symboles filtrés vers la première entité EC1 qui les reçoit sur chacune des AN1 antennes.

Dans une autre variante, l'une des deux entités est constituée de plusieurs entités. Par exemple, la deuxième entité EC2 est constituée de plusieurs deuxièmes entités EC21 à EC2N, avec N ≥ 2. Chaque deuxième entité EC2n, avec 1 ≤ n ≤ N, comprend AN2n antennes et la première entité EC1 comprend AN1 antennes. Alors il existe AN1 × AN2n canaux de propagation entre la première entité EC1 et chaque deuxième entité EC2n.

Comme dans le cas précédent, la première entité EC1 émet AN1 impulsions distinctes à des instants différents pendant une première trame TR1 respectivement par les AN1 antennes d'émission. Dans chaque deuxième entité EC2n, au moins AN2n impulsions distinctes pendant la deuxième trame TR2 doivent être émises à des instants différents respectivement par les AN2n antennes d'émission. Des commandes d'émission de l'impulsion sont par exemple transmises respectivement aux N deuxièmes entités dans des messages de signalisation depuis la première entité EC1.

A chaque impulsion reçue, l'analyseur d'impulsion de chaque deuxième entité EC2n estime AN2n réponses impulsionnelles, et après réception de toute la première trame TR1, l'analyseur d'impulsion a estimé AN1 × AN2n réponses impulsionnelles. Chaque deuxième entité EC2n retourne temporellement les AN1 × AN2n réponses impulsionnelles estimées et combine ces dernières pour construire dynamiquement un seul filtre de pré-distorsion numérique FDn. Chaque deuxième entité EC2 filtre alors des symboles en fonction du filtre FDn et émet les symboles filtrés vers la première entité EC1.

L'invention décrite ici concerne un procédé et une entité communicante pour traiter des symboles transmis dans des trames selon un duplexage temporel. Selon une implémentation, les étapes du procédé de l'invention sont déterminées par les instructions d'un programme d'ordinateur incorporé dans l'entité communicante. Le programme comporte des instructions de programme qui, lorsque ledit programme est exécuté dans un processeur de l'entité communicante dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

## Revendications

1. Procédé pour traiter des symboles séparés par des intervalles de garde et transmis dans des trames à travers un canal de propagation entre des première et deuxième entités communicantes (EC1, EC2) selon un duplexage temporel, **caractérisé en ce qu'**il comprend dans la deuxième entité (EC2):
après réception d'une première impulsion (IMP) émise depuis la première entité (ECl) pendant un intervalle de garde prédéterminé d'une trame de symboles, une estimation (E4) de la réponse impulsionnelle du canal de propagation en fonction de l'impulsion reçue, un retournement temporel de la réponse impulsionnelle estimée et un filtrage (E5) des symboles en fonction de la réponse impulsionnelle retournée temporellement, et
une émission (E5, E2) des symboles filtrés et d'une deuxième impulsion pendant un intervalle de garde prédéterminé (IGp) dans une trame (TR2) vers la première entité (ECl).

2. Procédé conforme à la revendication 1, selon lequel chaque intervalle de garde est alloué à l'émission d'une donnée de redondance (DR), **caractérisé en ce qu'**il comprend un remplacement de la donnée de redondance relative à l'intervalle de garde prédéterminé (IGp) par l'impulsion (IMP) à émettre.

3. Procédé conforme à la revendication 1, selon lequel chaque intervalle de garde est alloué à l'émission d'une donnée de redondance (DR), **caractérisé en ce qu'**il comprend une réduction de la taille de la donnée de redondance dans l'intervalle de garde prédéterminé (IGp) pour y émettre l'impulsion (IMP).

4. Procédé conforme à la revendication 1, selon lequel chaque intervalle de garde est alloué à l'émission d'une donnée de redondance (DR), **caractérisé en ce qu'**il comprend une réduction de la taille d'au moins quelques données de redondance dans la trame (TR1c), une diminution des intervalles de garde (IG) incluant les données de redondance réduites, et une création de l'intervalle de garde prédéterminé ayant une durée correspondant à la diminution des intervalles de garde.

5. Procédé conforme à l'une quelconque des revendications 1 à 4, selon lequel l'intervalle de garde prédéterminé (IGp) est le dernier intervalle de garde de la trame.

6. Procédé conforme à l'une quelconque des revendications 1 à 5, **caractérisé en ce que** la deuxième entité comprend plusieurs antennes, et **en ce que** ledit procédé comprend l'émission d'autant de deuxièmes impulsions à des instants différents pendant la trame (TR2) par la deuxième entité (EC2) que d'antennes de la deuxième entité.

7. Entité communicante (ECl, EC2) pour traiter des symboles séparés par des intervalles de garde et transmis dans des trames à travers un canal de propagation entre ladite entité communicante et une autre entité communicante selon un duplexage temporel, **caractérisée en ce qu'**elle comprend :
- un moyen (DEM, AI) pour estimer la réponse impulsionnelle du canal de propagation en fonction d'une première impulsion reçue qui a été émise par ladite autre entité pendant un intervalle de garde prédéterminé d'une trame de symboles,
- un moyen (AI) pour retourner temporellement la réponse impulsionnelle estimée, et
- un moyen (MOD) pour filtrer des symboles en fonction de la réponse impulsionnelle retournée temporellement, et
- un moyen (GI, MOD) pour émettre les symboles filtrés et une deuxième impulsion pendant un intervalle de garde prédéterminé (IGp) dans une trame vers ladite autre entité.

8. Entité conforme à la revendication 7, où chaque intervalle de garde est alloué à l'émission d'une donnée de redondance (DR), **caractérisé en ce que** ladite entité est configurée pour remplacer la donnée de redondance relative à l'intervalle de garde prédéterminé (IGp) par l'impulsion (IMP) à émettre.

9. Entité conforme à la revendication 7, où chaque intervalle de garde est alloué à l'émission d'une donnée de redondance (DR), **caractérisé en ce que** ladite entité est configurée pour réduire la taille de la donnée de redondance dans l'intervalle de garde prédéterminé (IGp) pour y émettre l'impulsion (IMP).

10. Entité conforme à la revendication 7, où chaque intervalle de garde est alloué à l'émission d'une donnée de redondance (DR), **caractérisé en ce que** ladite entité est configurée pour réduire la taille d'au moins quelques données de redondance dans la trame (TR1c), pour diminuer des intervalles de garde (IG) incluant les données de redondance réduites, et pour créer l'intervalle de garde prédéterminé ayant une durée correspondant à la diminution des intervalles de garde.

11. Entité conforme à l'une quelconque des revendications 7 à 10, où l'intervalle de garde prédéterminé (IGp) est le dernier intervalle de garde de la trame.

12. Entité conforme à l'une quelconque des revendications 7 à 10, **caractérisé en ce que** la deuxième entité comprend plusieurs antennes, et **en ce que** la deuxième entité (EC2) est configurée pour émettre d'autant de deuxièmes impulsions à des instants différents pendant la trame (TR2) que d'antennes de la deuxième entité.

13. Programme d'ordinateur comprenant des instructions de code de programme pour la mise en oeuvre du procédé selon l'une quelconque des revendications 1 à 6, lorsque le programme est exécuté par un processeur.

14. Support d'enregistrement lisible par un ordinateur sur lequel est enregistré un programme d'ordinateur comprenant des instructions pour l'exécution des étapes du procédé selon l'une quelconque des revendications 1 à 6.

## Patentansprüche

1. Verfahren zur Verarbeitung von Symbolen, die durch Schutzintervalle getrennt sind und in Frames über einen Ausbreitungskanal zwischen ersten und zweiten kommunizierenden Einheiten (EC1, EC2) gemäß Zeitduplexverfahrens übertragen werden, **dadurch gekennzeichnet, dass** es in der zweiten Einheit (EC2) umfasst:
nach dem Empfangen eines ersten Impulses (IMP), der von der ersten Entität (EC1) während eines vorbestimmten Schutzintervalls eines Symbolframes gesendet wird, eine Schätzung (E4) der Impulsantwort des Ausbreitungskanals als Funktion des empfangenen Impulses, eine Zeitumkehrung der geschätzten Impulsantwort und eine Filterung (E5) der Symbole als Funktion der zeitumgekehrten Impulsantwort, und
eine Übertragung (E5, E2) der gefilterten Symbole und eines zweiten Impulses während eines vorbestimmten Schutzintervalls (IGp) in einem Frame (TR2) an die erste Einheit (EC1).

2. Verfahren nach Anspruch 1, wobei jedes Schutzintervall der Übertragung von Redundanzdaten (DR) zugeordnet ist, **dadurch gekennzeichnet, dass** es ein Ersetzen der Redundanzdaten in Bezug auf dem vorbestimmten Schutzintervall (IGp) durch den zu übertragenden Impuls (IMP) umfasst.

3. Verfahren nach Anspruch 1, wobei jedes Schutzintervall der Übertragung von Redundanzdaten (DR) zugeordnet ist, **dadurch gekennzeichnet, dass** es eine Reduzierung der Größe der Redundanzdaten in dem vorbestimmten Schutzintervall (IGp) umfasst, um den Impuls (IMP) dorthin zu übertragen.

4. Verfahren nach Anspruch 1, wobei jedes Schutzintervall der Übertragung von Redundanzdaten (DR) zugeordnet ist, **dadurch gekennzeichnet, dass** es eine Reduzierung der Größe von mindestens einigen Redundanzdaten im Frame (TR1c), eine Verringerung der Schutzintervalle (IG) einschließlich der reduzierten Redundanzdaten und eine Erzeugung des vorbestimmten Schutzintervalls mit einer Dauer entsprechend der Verringerung der Schutzintervalle umfasst.

5. Verfahren nach einem der Ansprüche 1 bis 4, wobei das vorgegebene Schutzintervall (PGI) das letzte Schutzintervall des Frames ist.

6. Verfahren nach einem der Ansprüche 1 bis 5, **dadurch gekennzeichnet, dass** die zweite Einheit mehrere Antennen umfasst, und dass das Verfahren die Emission von so vielen zweiten Impulsen zu unterschiedlichen Zeiten während des Frames (TR2) durch die zweite Einheit (EC2) umfasst wie Antennen der zweiten Einheit.

7. Kommunizierende Einheit (EC1, EC2) zur Verarbeitung von Symbolen, die durch Schutzintervalle getrennt sind und in Frames über einen Ausbreitungskanal zwischen der kommunizierenden Einheit und einer anderen kommunizierenden Einheit im Zeitduplexverfahren übertragen werden, **dadurch gekennzeichnet, dass** sie umfasst:
- ein Mittel (DEM, AI) zum Schätzen der Impulsantwort des Ausbreitungskanals als Funktion eines ersten empfangenen Impulses, der von der anderen Einheit während eines vorbestimmten Schutzintervalls eines Symbolframes übertragen wurde,
- ein Mittel (AI) zum zeitlichen Zurückgeben der geschätzten Impulsantwort, und
- ein Mittel (MOD) zum Filtern von Symbolen gemäß der zeitlich zurückgegebenen Impulsantwort, und
- ein Mittel (GI, MOD) zum Aussenden der gefilterten Symbole und eines zweiten Impulses während eines vorbestimmten Schutzintervalls (IGp) in einem Frame zu der anderen Einheit.

8. Einheit nach Anspruch 7, wobei jedes Schutzintervall der Übertragung von Redundanzdaten (DR) zugeordnet ist, **dadurch gekennzeichnet, dass** die Einheit konfiguriert ist, um die Redundanzdaten in Bezug auf das vorbestimmte Schutzintervall (IGp) durch den zu übertragenden Impuls (IMP) zu ersetzen.

9. Einheit nach Anspruch 7, wobei jedes Schutzintervall der Übertragung von Redundanzdaten (DR) zugeordnet ist, **dadurch gekennzeichnet, dass** die Einheit konfiguriert ist, um die Größe der Redundanzdaten in dem vorbestimmten Schutzintervall (IGp) zu reduzieren, um den Impuls (IMP) dorthin zu übertragen.

10. Einheit nach Anspruch 7, wobei jedes Schutzintervall der Übertragung von Redundanzdaten (DR) zugeordnet ist, **dadurch gekennzeichnet, dass** die Einheit konfiguriert ist, um die Größe von mindestens einigen Redundanzdaten im Frame (TR1c) zu reduzieren, Schutzintervalle (IG) einschließlich der reduzierten Redundanzdaten zu verringern und das vorbestimmte Schutzintervall mit einer Dauer zu erzeugen, die der Verringerung der Schutzintervalle entspricht.

11. Einheit nach einem der Ansprüche 7 bis 10, wobei das vorgegebene Schutzintervall (PGI) das letzte Schutzintervall des Frames ist.

12. Einheit nach einem der Ansprüche 7 bis 10, **dadurch gekennzeichnet, dass** die zweite Einheit mehrere Antennen umfasst, und dass die zweite Einheit (EC2) konfiguriert ist, um so viele zweite Impulse zu unterschiedlichen Zeiten während des Frames (TR2) zu übertragen wie Antennen der zweiten Einheit.

13. Computerprogramm mit Programmcodeanweisungen zur Durchführung des Verfahrens nach einem der Ansprüche 1 bis 6, wenn das Programm von einem Prozessor ausgeführt wird.

14. Aufzeichnungsmedium, das von einem Computer lesbar ist, auf dem ein Computerprogramm aufgezeichnet ist, einschließlich Anweisungen zur Durchführung der Verfahrensschritte nach einem der Ansprüche 1 bis 6.

## Claims

1. A method for processing symbols separated by guard intervals and transmitted in frames through a propagation channel between first and second communicating entities (EC1, EC2) according to a time duplexing, **characterised in that** it comprises in the second entity (EC2):
after receiving a first pulse (IMP) emitted from the first entity (EC1) during a predetermined guard interval of a frame of symbols, assessing (E4) the pulse response of the propagation channel as a function of the received pulse, time-reversing the assessed pulse response and filtering (E5) the symbols as a function of the time-reversed pulse response, and
emitting (E5, E2) the filtered symbols and a second pulse during a predetermined guard interval (IGp) in a frame (TR2) to the first entity (EC1).

2. The method according to claim 1, wherein each guard interval is allocated to the emission of a redundancy datum (DR), **characterised in that** it comprises replacing the redundancy datum relating to the predetermined guard interval (IGp) with the impulse (IMP) to be emitted.

3. The method according to claim 1, wherein each guard interval is allocated to the emission of a redundancy datum (DR), **characterised in that** it comprises reducing the size of the redundancy datum in the predetermined guard interval (IGp) to emit the pulse (IMP) therein.

4. The method according to claim 1, wherein each guard interval is allocated to the emission of a redundancy datum (DR), **characterised in that** it comprises reducing the size of at least some redundancy data in the frame (TR1c), decreasing the guard intervals (IG) including the reduced redundancy data, and creating the predetermined guard interval having a duration corresponding to the decrease of the guard intervals.

5. The method according to any of claims 1 to 4, wherein each the predetermined guard interval (IGp) is the last guard interval of the frame.

6. The method according to any of claims 1 to 5, **characterised in that** the second entity comprises several antennas, and **in that** said method comprises emitting as many second pulses at different instants during the frame (TR2) by the second entity (EC2) as antennas of the second entity.

7. A communicating entity (EC1, EC2) for processing symbols separated by guard intervals and transmitted in frames through a propagation channel between said communicating entity and another communicating entity according to a time duplexing, **characterised in that** it comprises:
- a means (DEM, AI) for assessing the pulse response of the propagation channel as a function of a first received pulse which has been emitted by said other entity during a predetermined guard interval of a frame of symbols,
- a means (AI) for time-reversing the assessed pulse response, and
- a means (MOD) for filtering symbols as a function of the time-reversed pulse response, and
- a means (GI, MOD) for emitting the filtered symbols and a second pulse during a predetermined guard interval (IGp) in a frame to said other entity.

8. The entity according to claim 7, where each guard interval is allocated to the emission of a redundancy datum (DR), **characterised in that** said entity is configured to replace the redundancy datum relating to the predetermined guard interval (IGp) with the pulse (IMP) to be emitted.

9. The entity according to claim 7, where each guard interval is allocated to the emission of a redundancy datum (DR), **characterised in that** said entity is configured to reduce the size of the redundancy datum in the predetermined guard interval (IGp) to emit the pulse (IMP) therein.

10. The entity according to claim 7, where each guard interval is allocated to the emission of a redundancy datum (DR), **characterised in that** said entity is configured to reduce the size of at least some redundancy data in the frame (TR1c), to decrease guard intervals (IG) including the reduced redundancy data, and to create the predetermined guard interval having a duration corresponding to the decrease of the guard intervals.

11. The entity according to any of claims 7 to 10, where the predetermined guard interval (IGp) is the last guard interval of the frame.

12. The entity according to any of claims 7 to 10, **characterised in that** the second entity comprises several antennas, and **in that** the second entity (EC2) is configured to emit as many second pulses at different instants during the frame (TR2) as antennas of the second entity.

13. A computer program comprising program code instructions for implementing the method according to any of claims 1 to 6, when the program is executed by a processor.

14. A computer-readable recording medium on which a computer program comprising instructions for executing the steps of the method according to any of claims 1 to 6, is recorded.
